# EUROPÄISCHE PATENTSCHRIFT

(11) **EP 2 162 257 B1**
(45) Veröffentlichungstag und Bekanntmachung des Hinweises auf die Patenterteilung: **01.12.2010**
(21) Anmeldenummer: 08749823.4
(22) Anmeldetag: 29.04.2008
(51) Int. Cl.: B23D 49/16, B23D 51/02

(54) **HANDWERKZEUGMASCHINE**
HANDHELD MACHINE TOOL
MACHINE-OUTIL À MAIN

(30) Priorität: 29.06.2007 DE 102007030246
(43) Veröffentlichungstag der Anmeldung: 17.03.2010
(73) Patentinhaber: Robert Bosch GmbH, 70442 Stuttgart (DE)
(72) Erfinder: KAISER, Hans, CH-3297 Leuzigen (CH); DELFINI, Stefano, CH-2544 Bettlach (CH); KOEDER, Thilo, 70839 Gerlingen (DE); AFFOLTER, Martin, CH-3296 Arch (CH); PLATZER, Joachim, 71686 Remseck-Hochberg (DE)
(86) Internationale Anmeldenummer: PCT/EP2008/055202
(87) Internationale Veröffentlichungsnummer: WO 2009/003738

(56) Entgegenhaltungen:
- DE-A1- 10 119 561
- DE-A1- 19 653 242

## Beschreibung

### Stand der Technik

Die Erfindung geht aus von einer Handwerkzeugmaschine mit einem eine hin- und hergehende Bewegung ausführenden Kraftwerkzeug, insbesondere von einer Hubstichsägemaschine mit Hubsägeblatt, nach dem Oberbegriff des Anspruchs 1.

Bei einer z.B. als Handhubsägemaschine ausgebildeten Handwerkzeugmaschine mit einem hin- und hergehenden, einseitig eingespannten Sägeblatt (DE 101 19 561 A1) erfordert das exakte Sägen entlang einer auf dem Werkstück vorgezeichneten Kontur einen hohen Grad an Übung. Trotzdem besteht die Gefahr von fehlerhaften Sägeschnitten, da das Sägeblatt infolge von beim Sägen am Sägeblatt auftretende Querkräften zum Verlaufen neigt. Dabei verläuft das Sägeblatt immer zuerst an der Werkstückunterkante, also an der unteren Schnittkante, so dass dann, wenn der Bedienende das Verlaufen an der Werkstückoberkante erkennt, bereits an der Werkstückunterkante eine relativ große Abweichung von der gewünschten Kontur erfolgt ist. Wenn nunmehr der Bedienende beim Sichtbarwerden der Bahnabweichung an der Werkstückoberfläche korrigierend eingreift, ist bereits ein beträchtlicher, nicht mehr zu kompensierender Fehler an der Schnittunterkante entstanden. Selbst bei exakter Linienverfolgung auf der Werkstückoberfläche kann nicht sicher ausgeschlossen werden, dass das Sägeblatt an der Unterkante des Werkstücks verläuft.

### Offenbarung der Erfindung

Die erfindungsgemäße Handwerkzeugmaschine mit den Merkmalen des Anspruchs 1 hat den Vorteil, dass durch die Messung der Querkräfte oberhalb und nahe der oberen Schnittkante und durch die Wirkung des die Querkräfte kompensierenden Aktors, der minimale Ausgleichsbewegungen am Kraftwerkzeug hervorruft, den Querkräften schon bei ihrem ersten Auftreten am Sägeblatt entgegengewirkt wird und somit ein Verlaufen des Kraftwerkzeugs, insbesondere des Sägeblatts bei geraden Schnitten oder Schnitten mit konstanten Radien, vermieden wird.

Durch die in den weiteren Ansprüchen aufgeführten Maßnahmen sind vorteilhafte Weiterbildungen und Verbesserungen der im Anspruch 1 angegebenen Handwerkzeugmaschine möglich.

### Kurze Beschreibung der Zeichnungen

Die Erfindung ist anhand eines in den Zeichnungen dargestellten Ausführungsbeispiels in der nachfolgenden Beschreibung näher erläutert. Es zeigen jeweils in schematischer Darstellung:
- Fig. 1: eine Seitenansicht einer Hubstichsägemaschine,
- Fig. 2: eine vergrößerte Ansicht des Ausschnitts II in Richtung Pfeil II in Fig. 1,
- Fig. 3: einen Regelkreis in der Handwerkzeugmaschine gemäß Fig. 1 und 2.

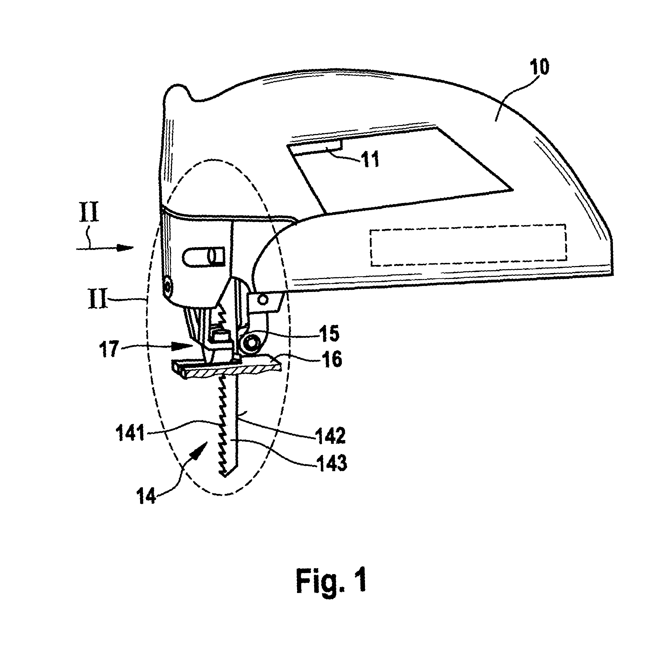

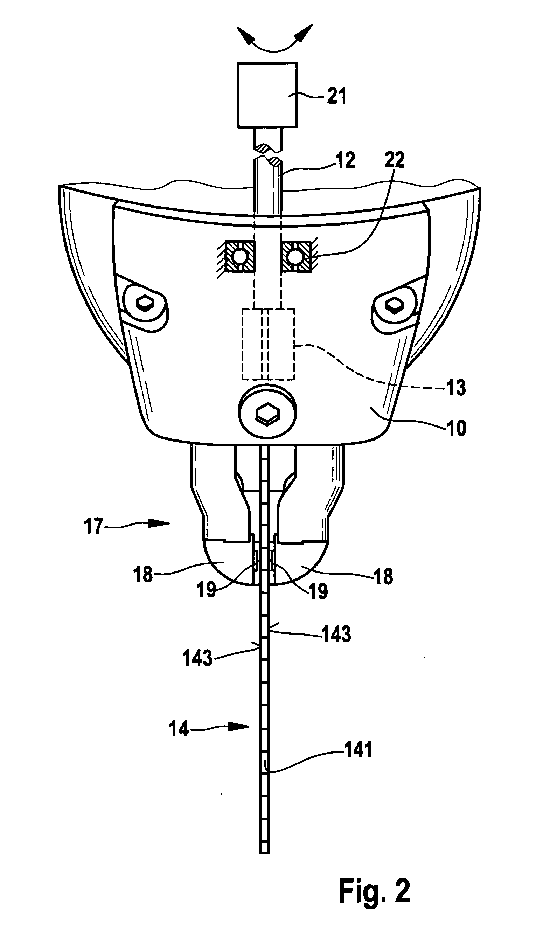

Die in Fig. 1 in Seitenansicht schematisiert dargestellte Hubstichsägemaschine als Ausführungsbeispiel für eine Handwerkzeugmaschine mit einem eine hin- und hergehende Bewegung ausführenden Kraftwerkzeug weist ein Maschinengehäuse 10 auf, in dem ein mittels eines Ein-/Ausschalters 11 ein- und ausschaltbarer Elektromotor aufgenommen ist, der über ein Getriebe eine Hubstange 12 in eine aufwärts und abwärts gerichtete Hubbewegung antreibt. Die Hubstange 12 2 ist in einer in Fig. 2 schematisch angedeuteten Lagerung 22 vertikal geführt. Am unteren Ende der Hubstange 12 ist ein Werkzeughalter 13 angeordnet, in dem ein Stich- oder Hubsägeblatt endseitig eingespannt ist. Das Hubsägeblatt 14 weist an voneinander abgekehrten Schmalseiten einerseits eine Sägezahnleiste 141 und andererseits einen Sägablattrücken 142 auf. Während des Hubs des Hubsägeblatts 14 ist der Sägeblattrücken 142 an einer Stützrolle 15 abgestützt, die am Maschinengehäuse 10 gehalten ist. Am Maschinengehäuse 10 ist weiterhin eine unterhalb des Maschinegehäuses 10 angeordnete Fußplatte 16 befestigt, die zum Aufsetzen der Hubstichsägemaschine auf das Werkstück und zum Führen der Hubstichsägemaschine dient. Das senkrecht zu der Fußplatte 16 sich bewegende Hubsägeblatt 14 ist durch eine Ausnehmung 161 in der Fußplatte 16 hindurchgeführt. Die Fußplatte 16 ist in Fig. 1 nur ausschnittweise angedeutet.

An der Hubstichsägemaschine ist ein Führungsmechanismus 17 vorgesehen, mit dem das Hubsägeblatt 14 nahe der Fußplatte 16 seitlich geführt ist. Der Führungsmechanismus 17 besteht aus zwei Führungsbacken 18, wobei jeweils ein Führungsbacken 18 einer der beiden voneinander abgekehrten Großflächen 143 des Hubsägeblatts 14 zugekehrt ist.

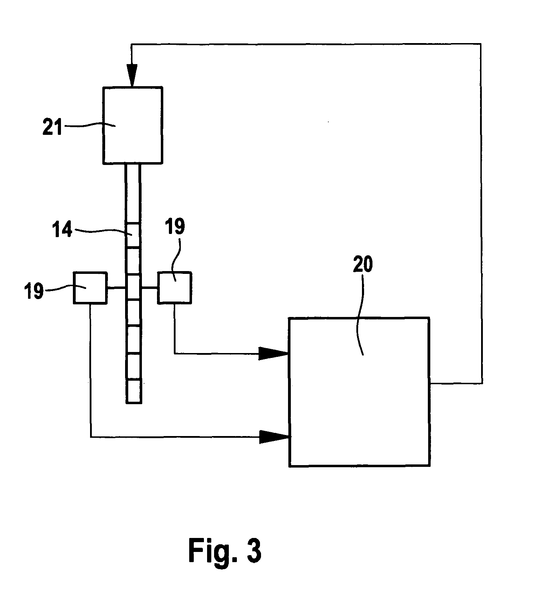

Die Hubsägemaschine verfügt weiterhin über eine Vorrichtung zur Querkraftkompensation, die ein Verlaufen des Hubsägeblatts 14 bei geraden Schnitten oder Schnitten mit konstanten Radien vermeidet. Die Vorrichtung zur Querkraftkompensation umfasst zwei Kraftaufnehmer 19, einen Regler 20 und einen Aktor 21. Kraftaufnehmer 19, Regler 20 und Aktor 21 sind zu einem geschlossenen Regelkreis, wie er in Fig. 3 illustriert ist, zusammengefasst. Die beispielsweise als Piezoelemente ausgebildeten Kraftaufnehmer 19 sind in jeweils einem der Führungsbacken 18 des Führungsmechanismus 17 integriert und messen die am Hubsägeblatt 14 auftretenden, quer zur Hubrichtung auf das Sägeblatt 14 wirkenden Querkräfte. Die Ausgangssignale der beiden Kraftaufnehmer 19 sind dem Regler 20 zugeführt, der an den Aktor 21 eine von der Größe der Kraftaufnehmersignale abhängige Stellgröße legt, der seinerseits eine solche minimale Verdrehung des Hubsägeblatts 14 vornimmt, dass eine Kompensation der momentan auf das Hubsägeblatt 14 wirkende Querkraft herbeigeführt wird. Der Aktor 21 ist beispielsweise ein piezoelektrisches Stellelement, das in dem hier gezeigten Ausführungsbeispiel an der Werkzeugaufnahme oder an der Hubstange 12 angreift und eine minimale Verdrehung der Werkzeugaufnahme oder der Hubstange 12 bewirkt. Hierzu kann die Hubstange 12 in Grenzen drehbar ausgebildet sein oder aber auch nur ein vorhandenes Drehspiel der Hubstange 12 ausgenutzt werden. Die Aktorkräfte können bei starrer Hubstange 12 auch am Hubsägeblatt 14 direkt eingeleitet werden, z. B. über die Führungsbacken 18 oder andere seitliche Führungsrollen, wobei diese linear verschoben oder gedreht werden können. Alternativ können die Querkärfte auch an der Hubstange 12 oder deren unteren Lagerung 22 mittels Kraftaufnehmer 19 oder über definierte Lagerverformungen gemessen werden.

## Patentansprüche

1. Handwerkzeugmaschine mit einem eine hin- und hergehende Bewegung ausführenden Kraftwerkzeug, insbesondere Hubsägemaschine mit Hubsägeblatt (14), **dadurch gekennzeichnet, dass** dem Kraftwerkzeug mindestens ein Kraftaufnehmer (19) zugeordnet ist, der die Größe einer am Kraftwerkzeug auftretenden, quer zur Bewegungsrichtung gerichteten Querkraft misst, und dass mindestens ein abhängig von der gemessenen Größe der Querkraft auf das Kraftwerkzeug wirkender Aktor (21) zur Querkraftkompensation vorgesehen ist.

2. Handwerkzeugmaschine nach Anspruch 1, **dadurch gekennzeichnet, dass** das Kraftwerkzeug in einem antreibbaren Werkzeughalter (13) eingespannt ist und dass der mindestens eine Kraftaufnehmer (19) im Abstand vom Werkzeughalter (13) relativ zum Kraftwerkzeug feststehend angeordnet ist.

3. Handwerkzeugmaschine nach Anspruch 1 oder 2, **dadurch gekennzeichnet, dass** auf voneinander abgekehrten Seiten des Kraftwerkzeugs jeweils ein Kraftaufnehmer (19) angeordnet ist und dass die beiden Kraftaufnehmer (19) einander am Kraftwerkzeug unmittelbar gegenüberliegen.

4. Handwerkzeugmaschine nach Anspruch 3, **dadurch gekennzeichnet, dass** das Kraftwerkzeug zwischen relativ zu dem Kraftwerkzeug feststehenden, am Kraftwerkzeug einander gegenüberliegenden Führungsbacken (18) seitlich geführt ist und dass in jedem Führungsbacken (18) ein Kraftaufnehmer (19) integriert ist.

5. Handwerkzeugmaschine nach einem der Ansprüche 1 bis 4, **dadurch gekennzeichnet, dass** der mindestens eine Aktor (21) zur Auslösung einer mindestens minimalen Verdrehung des Kraftwerkzeugs um seine Längsachse ausgebildet ist.

6. Handwerkzeugmaschine nach Anspruch 5, **dadurch gekennzeichnet, dass** der Aktor (21) an dem Werkzeughalter (13) oder an einer den Werkzeughalter (13) endseitig tragenden Hubstange (12) angreift.

7. Handwerkzeugmaschine nach einem der Ansprüche 1 bis 6, **dadurch gekennzeichnet, dass** Kraftaufnehmer (19) und Aktor (21) in einem Regelkreis angeordnet sind.

8. Handwerkzeugmaschine nach einem der Ansprüche 1 bis 7, **dadurch gekennzeichnet, dass** der Kraftaufnehmer (19) ein Piezoelement aufweist.

9. Handwerkzeugmaschine nach einem der Ansprüche 1 bis 8, **dadurch gekennzeichnet, dass** der Aktor (21) ein piezoelektrisches Stellelement ist.

## Claims

1. Portable power tool having a power-operated tool performing a reciprocating movement, in particular a jigsaw having a reciprocating saw blade (14) **characterized in that** at least one force transducer (19) is assigned to the power-operated tool, said force transducer (19) measuring the magnitude of a transverse force which occurs at the power-operated tool and is directed transversely to the direction of movement, and **in that** at least one actuator (21) acting on the power-operated tool as a function of the measured magnitude of the transverse force is provided for transverse force compensation.

2. Portable power tool according to Claim 1, **characterized in that** the power-operated tool is clamped in place in a drivable tool holder (13), and **in that** the at least one force transducer (19) is arranged at a distance from the tool holder (13) in a fixed position relative to the power-operated tool.

3. Portable power tool according to Claim 1 or 2, **characterized in that** a force transducer (19) is arranged on each of the sides of the power-operated tool facing away from one another, and **in that** the two force transducers (19) are directly opposite one another at the power-operated tool.

4. Portable power tool according to Claim 3, **characterized in that** the power-operated tool is guided laterally between guide jaws (18) which are fixed relative to the power-operated tool and are opposite one another at the power-operated tool, and **in that** a force transducer (19) is integrated in each guide jaw (18).

5. Portable power tool according to one of Claims 1 to 4, **characterized in that** the at least one actuator (21) is designed for initiating an at least minimal rotation of the power-operated tool about its longitudinal axis.

6. Portable power tool according to Claim 5, **characterized in that** the actuator (21) acts on the tool holder (13) or on a reciprocating rod (12) carrying the tool holder (13) at the end.

7. Portable power tool according to one of Claims 1 to 6, **characterized in that** force transducer (19) and actuator (21) are arranged in a control loop.

8. Portable power tool according to one of Claims 1 to 7, **characterized in that** the force transducer (19) is a piezo element.

9. Portable power tool according to one of Claims 1 to 8, **characterized in that** the actuator (21) is a piezoelectric control element.

## Revendications

1. Machine-outil à main comprenant un outil motorisé effectuant un mouvement de va-et-vient, notamment une scie à mouvement alternatif comprenant une lame de scie à mouvement alternatif (14), **caractérisée en ce que** l'on associe à l'outil motorisé au moins un récepteur de force (19), qui mesure l'amplitude d'une force transversale appliquée à l'outil motorisé, orientée transversalement à la direction de déplacement, et **en ce qu'**au moins un actionneur (21) agissant en fonction de l'amplitude mesurée de la force transversale appliquée à l'outil motorisé est prévu pour compenser la force transversale.

2. Machine-outil à main selon la revendication 1, **caractérisée en ce que** l'outil motorisé est serré dans un porte-outil (13) pouvant être entraîné, et **en ce que** l'au moins un récepteur de force (19) est disposé à distance du porte-outil (13) de manière fixe par rapport à l'outil motorisé.

3. Machine-outil à main selon la revendication 1 ou 2, **caractérisée en ce qu'**un récepteur de force (19) respectif est disposé sur des côtés de l'outil motorisé opposés l'un à l'autre, et **en ce que** les deux récepteurs de force (19) sont directement opposés l'un à l'autre sur l'outil motorisé.

4. Machine-outil à main selon la revendication 3, **caractérisée en ce que** l'outil motorisé est guidé latéralement entre des mâchoires de guidage (18) opposées l'une à l'autre sur l'outil motorisé et fixes par rapport à l'outil motorisé, et **en ce qu'**un récepteur de force (19) est intégré dans chacune des mâchoires de guidage (18).

5. Machine-outil à main selon l'une quelconque des revendications 1 à 4, **caractérisée en ce que** l'au moins un actionneur (21) est réalisé pour déclencher une rotation au moins minimale de l'outil motorisé autour de son axe longitudinal.

6. Machine-outil à main selon la revendication 5, **caractérisée en ce que** l'actionneur (21) vient en prise sur le porte-outil (13) ou sur une tige de levage (12) portant le porte-outil (13) du côté de son extrémité.

7. Machine-outil à main selon l'une quelconque des revendications 1 à 6, **caractérisée en ce que** le récepteur de force (19) et l'actionneur (21) sont disposés dans un circuit de réglage.

8. Machine-outil à main selon l'une quelconque des revendications 1 à 7, **caractérisée en ce que** le récepteur de force (19) présente un élément piézoélectrique.

9. Machine-outil à main selon l'une quelconque des revendications 1 à 8, **caractérisée en ce que** l'actionneur (21) est un élément de commande piézoélectrique.
